# EUROPEAN PATENT APPLICATION

(11) **EP 4 667 316 A1**
(43) Date of publication of application: **24.12.2025**
(21) Application number: 24757252.2
(22) Date of filing: 14.02.2024
(51) Int. Cl.: B60W 50/02, B60W 40/02, H04W 4/46

(54) **METHOD FOR DIAGNOSING FAILURE OF VEHICLE SENSOR**

(30) Priority: 14.02.2023 KR 20230019676; 13.02.2024 KR 20240020299
(71) Applicant: Hyundai Motor Company, Seoul 06797 (KR); Kia Corporation, Seoul 06797 (KR)
(72) Inventor: JUNG, Chang Hun, Hwaseong-si Gyeonggi-do 18280 (KR); PARK, Seung Wook, Yongin-si Gyeonggi-do 16847 (KR); HAN, Gene Back, Hwaseong-si Gyeonggi-do 18280 (KR)
(74) Representative: Isarpatent
(86) International application number: PCT/KR2024/095143
(87) International publication number: WO 2024/172531

(57) **Abstract**

A method for diagnosing a sensor failure of a vehicle in a V2X-based cooperative autonomous driving environment is disclosed.

According to one aspect of the present disclosure, the method for diagnosing a sensor failure of a vehicle comprises: receiving, by the vehicle, object recognition information from at least one of a surrounding vehicle, an infrastructure, or a pedestrian; recognizing, by the vehicle, an object using a lidar sensor; and determining, by the vehicle, whether the lidar sensor has failed, based on the received object recognition information and the object information recognized using the lidar sensor.

## Description

### [Technical Field]

The present disclosure relates to a method for diagnosing sensor failure in a vehicle. More specifically, the present disclosure relates to a method for diagnosing sensor failure in a vehicle within a V2X-based cooperative autonomous driving environment.

### [Background]

The matters described in this section are only for enhancement of understanding of the background of the disclosure, and should not be taken as acknowledgment that they correspond to prior art already known to those skilled in the art.

An autonomous vehicle (AV) refers to a vehicle that is capable of operating on its own by recognizing a driving environment, assessing risks, and planning its driving path without driver intervention. The level of automation of autonomous vehicles is classified into six levels, from Level 0 to Level 5, in accordance with the J3016 guideline published by the Society of Automotive Engineers (SAE).

A connectivity technology that supports Vehicle-to-Everything (V2X) communication for autonomous vehicles is being studied. V2X refers to a technology that enables communication between a vehicle and various external entities, and may be categorized into Vehicle-to-Vehicle (V2V), Vehicle-to-Infrastructure (V2I), Vehicle-to-Pedestrian (V2P), and Vehicle-to-Network (V2N) depending on the entity communicating with the vehicle. Standards for V2X technology include LTE/NR C-V2X based on 4G/5G cellular network and IEEE 802.11bd based on Dedicated Short-Range Communications (DSRC).

When V2X technology is integrated with autonomous driving technology, users can enjoy more diverse services, and safer and more efficient driving can be achieved in the autonomous driving technology.

An autonomous vehicle generally comprises perception, determination, and control technologies. Most autonomous vehicles perceive the surrounding environment using various sensors, and perform determination and control operations based on the perception results. However, during driving, unexpected situations such as sensor malfunctions or failures may occur due to weather conditions, collisions, or cyberattacks. Such situations may degrade the safety of autonomous driving and pose serious risks. Therefore, it is becoming increasingly important to diagnose and respond to sensor failures during driving.

Conventionally, methods have been proposed for determining sensor failure by comparing measurement values of a plurality of sensors installed in a vehicle. However, such methods have limitations in accurately identifying which specific sensor has failed, and diagnosis becomes difficult when multiple sensors have failed simultaneously.

### [Disclosure]

### [Technical Problems]

The present disclosure is directed to provide a method for diagnosing sensor failure in an autonomous vehicle through V2X-based cooperation.

The problems to be solved by the present disclosure are not limited to those mentioned above, and other problems not mentioned herein will be clearly understood by those skilled in the art from the following description.

### [Technical Solutions]

According to an exemplary embodiment of the present disclosure, the present disclosure provides a method for diagnosing a sensor failure of a vehicle comprising: receiving, by the vehicle, object recognition information from at least one of a surrounding vehicle, an infrastructure, or a pedestrian; recognizing, by the vehicle, an object using a lidar sensor; and determining, by the vehicle, whether the lidar sensor has failed, based on the received object recognition information and the object information recognized using the lidar sensor.

The method may include receiving the object recognition information from at least one of the surrounding vehicle, the infrastructure, or the pedestrian via Vehicle-to-Everything (V2X) communication.

The surrounding vehicle may be located in front of the vehicle, and may transmit, via Vehicle-to-Vehicle (V2V) communication, object recognition information recognized using a rear-facing sensor to the vehicle.

The infrastructure may transmit, via Vehicle-to-Infrastructure (V2I) communication, object recognition information recognized using a sensor configured to detect surrounding objects to nearby vehicles.

The pedestrian may recognize a current location of the pedestrian using a sensor of a device carried by the pedestrian, and may transmit, via Vehicle-to-Pedestrian (V2P) communication, information of the pedestrian including the recognized location to nearby vehicles.

The method may determine that the lidar sensor has failed when at least one object included in the received object recognition information corresponding to a detection range of the lidar sensor is not recognized by the lidar sensor.

The method may determine that the lidar sensor is functioning normally when all objects included in the received object recognition information corresponding to a detection range of the lidar sensor are recognized by the lidar sensor.

According to another exemplary embodiment of the present disclosure, the present disclosure provide an apparatus for diagnosing a sensor failure of a vehicle, the apparatus comprising: a V2X communication unit configured to perform Vehicle-to-Everything (V2X) communication with at least one of a surrounding vehicle, an infrastructure, or a pedestrian; a sensor unit including a lidar sensor; and a control unit configured to receive object recognition information from the at least one of the surrounding vehicle, the infrastructure, or the pedestrian, recognize an object using the lidar sensor, and determine whether the lidar sensor has failed based on the received object recognition information and the object information recognized using the lidar sensor.

### [Advantageous Effects]

According to an embodiment of the present disclosure, it is possible to improve the accuracy of diagnosing sensor failure in an autonomous vehicle.

According to an embodiment of the present disclosure, it is possible to perceive the surrounding environment even when a sensor failure occurs in the autonomous vehicle.

The effects of the present disclosure are not limited to the effects mentioned above, and other effects that are not mentioned can be clearly understood by those skilled in the art from the following description.

### [Brief Description of the Drawings]

FIG. 1 is a diagram illustrating an example of a V2X-based cooperative autonomous driving environment for diagnosing sensor failure of a vehicle according to an embodiment of the present disclosure.
FIG. 2 is a diagram illustrating the concept of diagnosing sensor failure of a vehicle through V2X-based cooperation according to an embodiment of the present disclosure.
FIG. 3 is a block diagram of an apparatus for diagnosing sensor failure of a vehicle according to an embodiment of the present disclosure.
FIG. 4 is a flowchart of a method for diagnosing sensor failure of a vehicle according to an embodiment of the present disclosure.
FIG. 5 is a flowchart illustrating a process of diagnosing sensor failure of a vehicle using object recognition information received from surrounding vehicles according to another embodiment of the present disclosure.
FIG. 6 is a flowchart illustrating a process of diagnosing sensor failure of a vehicle using object recognition information received from infrastructure according to another embodiment of the present disclosure.
FIG. 7 is a flowchart illustrating a process of diagnosing sensor failure of a vehicle using information received from a pedestrian according to another embodiment of the present disclosure.

### [Detailed Description]

Hereinafter, various exemplary embodiments of the present disclosure will be described in detail with reference to the accompanying drawings. In the following description, like reference numerals designate like elements, although the elements are shown in different drawings. Furthermore, for clarity and for brevity, the following description of various exemplary embodiments will omit a detailed description of related known components and functions when considered obscuring the subject of the present disclosure.

Various ordinal numbers or alpha codes such as first, second, i), ii), a), b), etc., are prefixed solely to differentiate one component from the other but not to imply or suggest the substances, order, or sequence of the components. Throughout the present specification, when a part "includes" or "comprises" a component, the part is meant to further include other components, to not exclude thereof unless specifically stated to the contrary. The terms such as "unit," "module," and the like refer to units in which at least one function or operation is processed and they may be implemented by hardware, software, or a combination thereof.

The description of the present disclosure to be presented below in conjunction with the accompanying drawings is directed to describe exemplary embodiments of the present disclosure and is not intended to represent the only embodiments in which the technical idea of the present disclosure may be practiced.

Vehicle sensors, such as lidar sensors, radar sensors, cameras, and ultrasonic sensors, have the advantage of providing relatively accurate data regarding the surrounding environment. In addition, by using multiple sensors, it is possible to compensate for the shortcomings of each individual sensor, thereby improving overall reliability. Sensor data can also be utilized in real time, even when the vehicle is operating at high speeds. However, under adverse conditions such as poor road surfaces or severe weather, various degrees of error may occur, hindering the effective use of sensor data. Furthermore, objects that suddenly appear in non-line-of-sight (NLOS) areas may not be recognized, thereby reducing the system's responsiveness.

V2X (Vehicle-to-Everything) communication utilizes messages such as the Basic Safety Message (BSM) defined in the SAE J2735 standard. The Basic Safety Message includes vehicle state information, such as position, speed, and heading, and may further include safety and operation-related information. Through such messages, it becomes possible to recognize objects located in non-line-of-sight (NLOS) areas, and the perception process is less affected by environmental factors.

By complementing vehicle sensors with V2X communication, various issues can be addressed. For example, V2X communication technology can be utilized to diagnose sensor failures and enable timely and efficient responses in order to maintain the stability of autonomous driving.

The present disclosure relates to a technology for improving the accuracy of diagnosing sensor failure in an autonomous vehicle by utilizing V2X-based cooperation. Specifically, the present disclosure provides a method of diagnosing sensor failure of an autonomous vehicle by receiving, through V2X communication, pedestrian information or surrounding environment information recognized by surrounding vehicles or infrastructure. Furthermore, in situations where the autonomous vehicle is unable to perceive the surrounding environment on its own due to sensor failure or the like, the information received via V2X communication may be utilized.

Although a lidar sensor is described as an example in the present specification, it is not limited thereto.

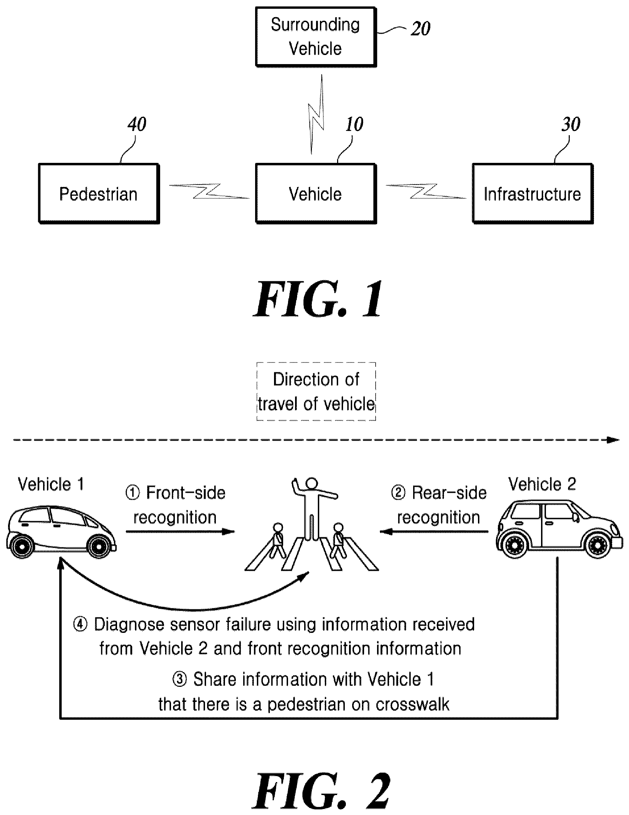

FIG. 1 is a diagram illustrating an example of a V2X-based cooperative autonomous driving environment for diagnosing sensor failure of a vehicle according to an embodiment of the present disclosure.

Referring to FIG. 1, an autonomous vehicle (10), a surrounding vehicle (20), an infrastructure (30), and a pedestrian (40) are interconnected via V2X communication to form a cooperative autonomous driving environment. Hereinafter, each of the surrounding vehicle (20), the infrastructure (30), and the pedestrian (40) is referred to as a "cooperative object".

The autonomous vehicle (10) may control the vehicle while sharing information with cooperative objects. The surrounding vehicle (20) is a vehicle located around the autonomous vehicle (10) and may share recognized surrounding environment information with the autonomous vehicle (10). The infrastructure (30) refers to signal controllers, RSUs (Road Side Units), and the like, which transmit traffic-related information to other objects (10, 20, and 40) at locations such as roadsides and intersections. The infrastructure (30) may share surrounding environment information, recognized through cameras or the like, with the autonomous vehicle (10). The pedestrian (40) carries a terminal capable of V2X communication and may share pedestrian-related information, including the current location, with the autonomous vehicle (10).

For example, the vehicle (10) may transmit its own status information to cooperative objects. The vehicle (10) may receive surrounding environment information recognized by cooperative objects. The vehicle (10) may receive information about traffic conditions ahead or about the surrounding vehicle (20). The vehicle (10) may communicate with infrastructure (30) that provides traffic-related information, such as traffic lights, speed cameras, or construction zones, and may receive information about the pedestrian (40). The vehicle (10) may quickly recognize and predict hazardous situations by using information received from cooperative objects in combination with surrounding environment information obtained through in-vehicle sensors.

Meanwhile, when an autonomous vehicle attempts to recognize objects using a lidar sensor, the lidar sensor may fail to recognize the objects due to a sensor failure or a cyberattack targeting the lidar sensor. As an example of a cyberattack, an attacker may carry out a Physical Removal Attack (PRA) using an adversary laser, which may cause the lidar sensor of the autonomous vehicle to malfunction. Here, a Physical Removal Attack refers to a technique that selectively removes lidar point cloud data of actual objects at the sensor level-before such data is used as input for object recognition-by employing laser-based spoofing or similar technologies. Due to the removal of such lidar information, the autonomous vehicle may fail to recognize objects, which may ultimately lead the autonomous vehicle to make unsafe autonomous driving decisions.

In this case, it is also possible to recognize objects using a sensor fusion technique that combines data from other in-vehicle sensors (e.g., radar, camera, etc.). However, those other sensors may also fail to operate due to various factors such as cyberattacks or weather conditions, or may be in a malfunctioning state due to defects or other issues.

Therefore, when the autonomous vehicle is unable to recognize an obstacle using the lidar sensor, it is necessary to determine whether the lidar sensor has failed by using obstacle recognition information received via V2X communication from a cooperative object, and to recognize the obstacle accordingly.

FIG. 2 is a diagram illustrating the concept of diagnosing sensor failure of a vehicle through V2X-based cooperation according to an embodiment of the present disclosure.

Referring to FIG. 2, it is assumed that vehicle 1 attempts to recognize a pedestrian on a crosswalk ahead using a lidar sensor, but fails to do so due to a Physical Removal Attack by an attacker or a failure of the lidar sensor. In this case, a surrounding vehicle 2 may recognize the pedestrian who is located in front of vehicle 1 and behind vehicle 2 using its own sensor, and may share information indicating the presence of the pedestrian on the crosswalk with vehicle 1. Upon receiving the information indicating the presence of a pedestrian on the crosswalk, vehicle 1 may attempt to recognize the pedestrian again using the lidar sensor. If the pedestrian is still not recognized, it may be determined that an abnormality or failure has occurred in the lidar sensor of vehicle 1.

To address this, the present disclosure provides a sensor failure diagnosis apparatus for an autonomous vehicle, which is capable of diagnosing sensor failure by utilizing information received from a cooperative object.

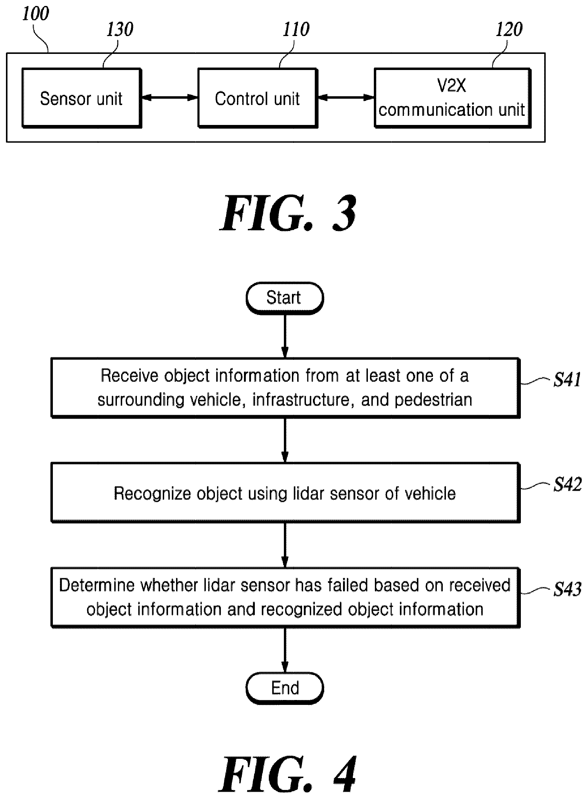

FIG. 3 is a block diagram of an apparatus for diagnosing sensor failure of a vehicle according to an embodiment of the present disclosure.

Referring to FIG. 3, an apparatus (100) for diagnosing sensor failure includes a control unit (110), a V2X communication unit (120), and a sensor unit (130). The apparatus (100) may be provided within an autonomous vehicle.

The controller (110) determines whether a failure has occurred in the lidar sensor based on object recognition information obtained by the vehicle itself through the lidar sensor and information received through V2X communication (e.g., pedestrian information or object recognition information detected by surrounding vehicles or infrastructure). For example, the controller (110) may determine whether the recognized information matches the received information. If the recognized information matches the received information, the controller (110) may determine that the lidar sensor is operating normally; otherwise, it may determine that an abnormality or failure has occurred in the lidar sensor.

The V2X communication unit (120) transmits and receives data with the surrounding vehicle (20), infrastructure (30), and/or the pedestrian (40) via V2X communication.

The sensor unit (130) includes a lidar sensor. The sensor unit (130) may also include a radar sensor, a camera, and the like. Additionally, the sensor unit (130) may include a GPS receiver, a speed sensor, an acceleration sensor, an angular velocity sensor, a steering angle sensor, and the like.

FIG. 4 is a flowchart of a method for diagnosing sensor failure of a vehicle according to an embodiment of the present disclosure.

Referring to FIG. 4, the vehicle (10) receives object recognition information from at least one of a surrounding vehicle (20), infrastructure (30), or a pedestrian (40) (S41). The vehicle (10) receives the object recognition information from at least one of the surrounding vehicle, infrastructure, or pedestrian through V2X communication.

For example, when the surrounding vehicle (20) is located in front of the vehicle (10), the surrounding vehicle (20) may recognize an object using a rear-facing sensor such as a lidar sensor, radar sensor, camera, or the like. In this case, the vehicle (10) may receive the object recognition information from the surrounding vehicle (20) via V2V communication.

For example, the infrastructure (30) may recognize the surrounding environment or objects using sensors such as a camera or the like, and the vehicle (10) may receive object information recognized by the infrastructure (30) through V2I communication.

For example, the pedestrian 40 may recognize a current location using a sensor of a terminal carried by the pedestrian 40, and the vehicle 10 may receive the object information including the current location of the pedestrian 40 and information about the pedestrian 40 through V2P communication.

The vehicle (10) recognizes an object using a lidar sensor (S42).

The vehicle (10) determines whether a failure has occurred in the lidar sensor based on the received object recognition information and the recognized object information (S43). Specifically, the vehicle (10) determines whether the lidar sensor has failed based on the object recognition information received from cooperative objects, such as the surrounding vehicle (20), infrastructure (30), or pedestrian (40), which are assumed to be secure and trustworthy, and the object information recognized using the lidar sensor.

For example, the vehicle (10) may determine whether a failure has occurred in the lidar sensor by comparing the received object recognition information corresponding to the detection range of the lidar sensor with the object information recognized by the lidar sensor.

For example, if at least one object included in the received object recognition information corresponding to the detection range of the lidar sensor is not recognized by the lidar sensor, it may be determined that the lidar sensor is abnormal or has failed.

For example, if all objects included in the received object recognition information corresponding to the detection range of the lidar sensor are recognized by the lidar sensor, it may be determined that the lidar sensor is functioning normally.

In some embodiments, the processes of S41 to S43 may be performed only when a continuity issue in object recognition using the lidar sensor is detected. Here, the continuity issue in object recognition refers to a situation where a specific object suddenly disappears while the lidar sensor is continuously recognizing that object. For example, when a person is walking in front of the vehicle, a properly functioning lidar sensor should recognize the person across successive frames. However, if the person suddenly disappears in one or more frames, it may be determined that a continuity issue in object recognition has occurred.

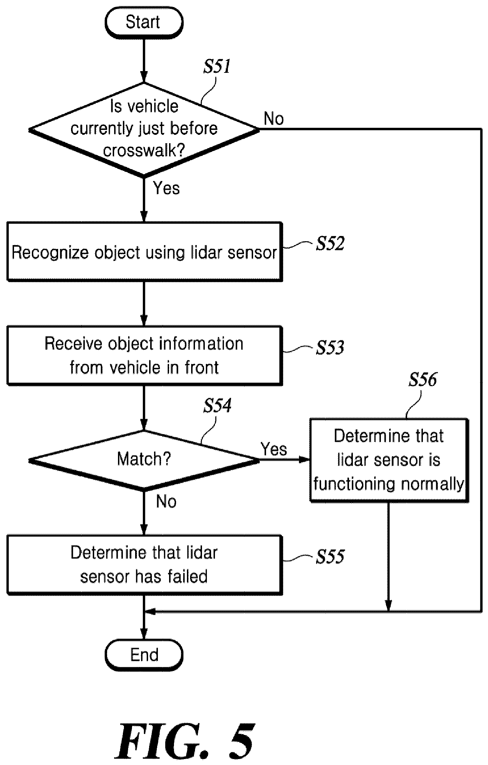

FIG. 5 is a flowchart illustrating a process of diagnosing sensor failure of a vehicle using object recognition information received from surrounding vehicles according to another embodiment of the present disclosure.

Referring to FIG. 5, the vehicle (10) checks whether its current position is just before a crosswalk while driving (S51). If the vehicle (10) is just before the crosswalk, it attempts to recognize objects, such as pedestrians, located in front of the vehicle (10) using a lidar sensor (S52).

The vehicle (10) receives object recognition information from a surrounding vehicle (20) located ahead (S53). The surrounding vehicle (20) may recognize an object on the crosswalk behind it using a rear-facing camera or lidar sensor and may transmit the recognized object information to the requesting vehicle (10). In some embodiments, step S53 may be performed before step S52. In some embodiments, the vehicle (10) may reattempt object recognition using the lidar sensor after receiving the object recognition information from the surrounding vehicle (20).

The vehicle (10) compares the object recognition information received from the surrounding vehicle (20) with the object information recognized by its own lidar sensor (S54). If the two pieces of information do not match, the vehicle (10) determines that the lidar sensor has failed (S55). If they match, the vehicle (10) determines that the lidar sensor is functioning normally (S56). According to some embodiments, if the lidar sensor is determined to have failed, the vehicle (10) may perform additional procedures such as displaying a message on the vehicle display indicating a suspected sensor failure, or transmitting such a message to a predetermined customer service center.

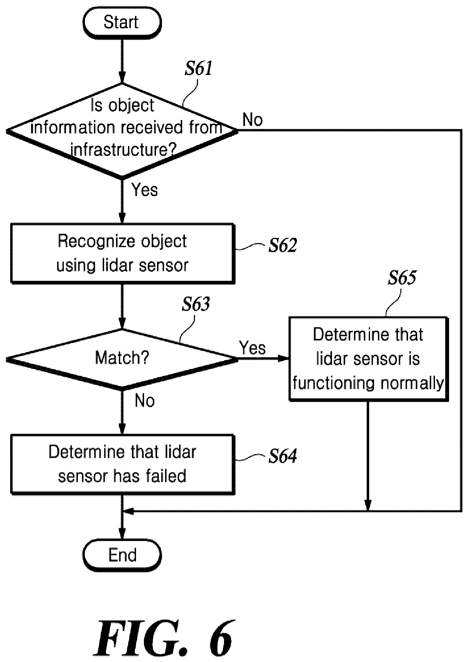

FIG. 6 is a flowchart illustrating a process of diagnosing sensor failure of a vehicle using object recognition information received from infrastructure according to another embodiment of the present disclosure.

Referring to FIG. 6, the vehicle (10) exchanges data with the infrastructure (30) via V2I communication. The infrastructure (30) may detect whether an object is present on a crosswalk using a camera or the like, and may broadcast the result to nearby vehicles, including the vehicle (10), via V2I communication (S61). According to some embodiments, step S61 may be performed when the traffic light at the crosswalk turns green.

After receiving the object recognition information from the infrastructure (30), the vehicle (10) recognizes objects such as pedestrians in front using the lidar sensor (S62).

The vehicle (10) compares the object recognition information received from the infrastructure (30) with the object information recognized by the lidar sensor (S63). If the two pieces of information do not match, the vehicle (10) determines that the lidar sensor has failed (S64). If they match, the vehicle (10) determines that the lidar sensor is functioning normally (S65). According to some embodiments, when the lidar sensor is determined to have failed, the vehicle (10) may perform additional procedures such as displaying a message on the vehicle display indicating a suspected sensor failure, or transmitting such a message to a predesignated customer service center.

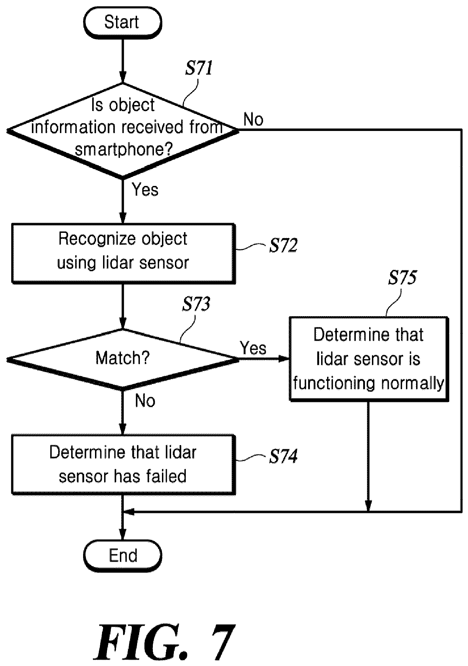

FIG. 7 is a flowchart illustrating a process of diagnosing sensor failure of a vehicle using information received from a pedestrian according to another embodiment of the present disclosure.

Referring to FIG. 7, the vehicle (10) exchanges data with a device carried by the pedestrian (40) via V2P communication. According to some embodiments, the pedestrian (40) may determine that the current location is at a crosswalk using a GPS receiver or the like embedded in the device. When the pedestrian approaches a certain proximity to vehicles near the crosswalk while crossing, the device may transmit information via V2P communication indicating that the pedestrian is crossing to surrounding vehicles, including the vehicle (10) (S71).

After receiving the object information from the pedestrian (40), the vehicle (10) recognizes objects such as pedestrians in front using a lidar sensor (S72).

The vehicle (10) compares the object information received from the pedestrian (40) with the object information recognized using the lidar sensor (S73). If the pedestrian (40) on the crosswalk is recognized by the lidar sensor, the vehicle (10) determines that the lidar sensor is functioning normally (S75). If the vehicle (10) receives object information from the pedestrian (40) but the lidar sensor fails to recognize the pedestrian on the crosswalk, it may determine that the lidar sensor has failed (S74). According to some embodiments, if the lidar sensor is determined to have failed, the vehicle (10) may perform additional procedures such as displaying a message on the vehicle display indicating a suspected sensor failure or transmitting such a message to a predesignated customer service center.

The apparatus or method according to an exemplary embodiment of the present disclosure may include the respective components provided to be implemented as hardware or software, or hardware and software combined. Additionally, each component may be functionally implemented by software, and a microprocessor may execute the function by software for each component when implemented.

Various illustrative implementations of the systems and methods described herein may be realized by digital electronic circuitry, integrated circuits, field-programmable gate arrays (FPGAs), application-specific integrated circuits (ASICs), computer hardware, firmware, software, and/or their combination. These various implementations may include those realized in one or more computer programs executable on a programmable system. The programmable system includes at least one programmable processor coupled to receive and transmit data and instructions from and to a storage system, at least one input device, and at least one output device, wherein the programmable processor may be a special-purpose processor or a general-purpose processor. The computer programs (which are also known as programs, software, software applications, or code) include instructions for a programmable processor and are stored in a "computer-readable recording medium."

The computer-readable recording medium includes any type of recording device on which data that can be read by a computer system are recordable. Examples of computer-readable recording mediums include non-volatile or non-transitory media such as a ROM, CD-ROM, magnetic tape, floppy disk, memory card, hard disk, optical/magnetic disk, storage devices, and the like. The computer-readable recording mediums may further include transitory media such as a data transmission medium. Furthermore, the computer-readable recording medium can be distributed in computer systems connected via a network, wherein the computer-readable codes can be stored and executed in a distributed mode.

Although the steps in the respective flowcharts are described to be sequentially performed, they merely instantiate the technical idea of various exemplary embodiments of the present disclosure. Therefore, a person having ordinary skill in the pertinent art could perform the steps by changing the sequences described in the respective flowcharts or by performing two or more of the steps in parallel, and hence the steps in the respective flowcharts are not limited to the illustrated chronological sequences.

The foregoing descriptions of specific exemplary embodiments of the present disclosure have been presented for purposes of illustration and description. They are not intended to be exhaustive or to limit the present disclosure to the precise forms disclosed, and obviously many modifications and variations are possible in light of the above teachings. The exemplary embodiments were chosen and described in order to explain certain principles of the invention and their practical application, to enable others skilled in the art to make and utilize various exemplary embodiments of the present disclosure, as well as various alternatives and modifications thereof. It is intended that the scope of the present disclosure be defined by the Claims appended hereto and their equivalents.

### (REFERENCE NUMERALS)

10: Vehicle
20: Surrounding Vehicle
30: Infrastructure
40: Pedestrian
110: Control Unit
120: V2X Communication Unit
130: Sensor Unit

### CROSS-REFERENCE TO RELATED APPLICATION

The present application claims priority to Korean Patent Application No. 10-2023-0019676, filed on February 14, 2023, and Korean Patent Application No. 10-2024-0020299, filed on February 13, 2024, the entire contents of which are incorporated herein by reference.

## Claims

1. A method for diagnosing a sensor failure of a vehicle, the method comprising:
receiving, by a vehicle, object recognition information from at least one of a surrounding vehicle, an infrastructure, or a pedestrian;
recognizing, by the vehicle, an object using a lidar sensor; and
determining, by the vehicle, whether the lidar sensor has failed, based on the received object recognition information and the object information recognized using the lidar sensor.

2. The method of claim 1, wherein the receiving comprises receiving, by the vehicle, the object recognition information from at least one of a surrounding vehicle, an infrastructure, or a pedestrian via Vehicle-to-Everything (V2X) communication.

3. The method of claim 1, wherein the surrounding vehicle is located in front of the vehicle, and transmits object recognition information recognized using a rear-facing sensor to the vehicle, via Vehicle-to-Vehicle (V2V) communication, and
wherein the recognizing comprises recognizing, by the vehicle, the object using a front-facing lidar sensor.

4. The method of claim 1, further comprising transmitting, by the infrastructure to nearby vehicles, object recognition information obtained using a sensor configured to detect surrounding objects, via Vehicle-to-Infrastructure (V2I) communication.

5. The method of claim 1, further comprising:
recognizing, by the pedestrian, a current location of the pedestrian using a sensor of a device carried by the pedestrian; and
transmitting, by the device of the pedestrian to nearby vehicles, information of the pedestrian including the recognized location, via Vehicle-to-Pedestrian (V2P) communication.

6. The method of claim 1, wherein the determining comprises determining whether the lidar sensor has failed by comparing the received object recognition information corresponding to a detection range of the lidar sensor with the object information recognized by the lidar sensor.

7. The method of claim 1, wherein the determining comprises determining that the lidar sensor has failed when at least one object included in the received object recognition information corresponding to a detection range of the lidar sensor is not recognized by the lidar sensor.

8. The method of claim 1, wherein the determining comprises determining that the lidar sensor is functioning normally when all objects included in the received object recognition information corresponding to a detection range of the lidar sensor are recognized by the lidar sensor.

9. An apparatus for diagnosing a sensor failure of a vehicle, the apparatus comprising:
a V2X communication unit configured to perform Vehicle-to-Everything (V2X) communication with a surrounding vehicle, an infrastructure, or a pedestrian;
a sensor unit including a lidar sensor; and
a control unit configured to:
receive object recognition information from at least one of a surrounding vehicle, an infrastructure, or a pedestrian;
recognize an object using the lidar sensor; and
determine whether the lidar sensor has failed based on the received object recognition information and the object information recognized using the lidar sensor.

10. The apparatus of claim 9, wherein the surrounding vehicle is located in front of the vehicle, and transmits object recognition information recognized using a rear-facing sensor to the vehicle, via Vehicle-to-Vehicle (V2V) communication, and
wherein the control unit recognizes the object using a front-facing lidar sensor.

11. The apparatus of claim 9, wherein the infrastructure transmits object recognition information obtained using a sensor configured to detect surrounding objects to nearby vehicles, via Vehicle-to-Infrastructure (V2I) communication.

12. The apparatus of claim 9, wherein the pedestrian recognizes a current location of the pedestrian using a sensor of a device carried by the pedestrian, and the device of the pedestrian transmits information of the pedestrian including the recognized location to nearby vehicles, via Vehicle-to-Pedestrian (V2P) communication.

13. The apparatus of claim 9, wherein the control unit determines whether the lidar sensor has failed by comparing the received object recognition information corresponding to a detection range of the lidar sensor with the object information recognized by the lidar sensor.

14. The apparatus of claim 9, wherein the control unit determines that the lidar sensor has failed when at least one object included in the received object recognition information corresponding to a detection range of the lidar sensor is not recognized by the lidar sensor.

15. The apparatus of claim 9, wherein the control unit determines that the lidar sensor is functioning normally when all objects included in the received object recognition information corresponding to a detection range of the lidar sensor are recognized by the lidar sensor.
